# EUROPÄISCHE PATENTSCHRIFT

(11) **EP 2 602 049 B1**
(45) Veröffentlichungstag und Bekanntmachung des Hinweises auf die Patenterteilung: **07.05.2014**
(21) Anmeldenummer: 11009746.6
(22) Anmeldetag: 09.12.2011
(51) Int. Cl.: B23P 15/00, B22F 3/105, B29C 33/30, B29C 33/38, B29C 45/26, B22F 5/00

(54) **Werkzeuge in Hybridbauweise**
Hybrid construction tools
Outils de construction hybride

(43) Veröffentlichungstag der Anmeldung: 12.06.2013
(73) Patentinhaber: Gigaset Communications GmbH, 81379 München (DE)
(72) Erfinder: Tüshaus, Klaus, 46414 Rhede (DE); Schaffeld, Bernhard, 46499 Hamminkeln (DE)
(74) Vertreter: Michalski Hüttermann & Partner Patentanwälte

(56) Entgegenhaltungen:
- EP-A1- 0 734 842
- WO-A2-2010/003882
- DE-A1- 10 229 952
- US-A- 5 031 483

## Beschreibung

Die vorliegende Erfindung betrifft ein Verfahren zur Herstellung von Formeinsätzen für Werkzeugmaschinen unter Verwendung eines Rapid-Tooling-Verfahrens. Ferner betrifft die vorliegende Erfindung einen Formeinsatz für Werkzeugmaschinen der sowohl mittels eines Rapid-Tooling-Verfahrens hergestellte Anteile, als auch mittels konventioneller Verfahren hergestellte Anteile aufweist.

Das Spritzgussverfahren ist ein Verfahren, das hauptsächlich zur Herstellung von Kunststoffwerkstücken eingesetzt wird. Hierbei wird ein Werkstoff aufgeschmolzen und in einen Hohlraum eingespritzt. Die Form des Hohlraums definiert hierbei die Form des späteren Werkstücks und, sofern keine Weiterbearbeitung des Werkstücks erfolgt, auch die Oberflächenbeschaffenheit des Werkstücks.

Der genannte Hohlraum wird meistens durch zwei oder mehr Formeinsätze gebildet, die in zwei oder mehr voneinander trennbare Maschinenelemente eingesetzt werden. Die Beschaffenheit der Formeinsätze hat damit direkten Einfluss auf die Ausgestaltung und Qualität des produzierten Werkstücks.

Zur Herstellung eines kugelförmigen Werkstücks können hierbei z.B. zwei Formeinsätze verwendet werden, die jeweils eine halbkugelförmige Ausnehmung besitzen. Die Formeinsätze müssen in jedem Falle so ausgelegt sein, dass sich das betreffende Werkstück nach dem Erstarren aus der geöffneten Form entnehmen lässt. Bei komplexeren Formen erfordert dies unter Umständen die Verwendung von mehr als zwei Formeinsätzen. Um das Entformen zu erleichtern, werder in entsprechenden Ausnehmungen innerhalb der Formeinsätze auch häufig sogenannte Auswerfer eingebracht, die meist werkstückseitig bündig mit dem Formelement abschließen und beim oder nach dem Öffnen der Form das Werkstück aus der Form drücken.

Zur Zuführung des aufgeschmolzenen Werkstoffs in die geschlossene Form müssen ferner eine oder mehrere Zuführungsöffnungen vorgesehen werden. Diese können sich ähnlich zu den Ausnehmungen für die Auswerfer innerhalb der Formeinsätze befinden oder auch als Ausnehmung an der Stelle vorgesehen sein, an der die zwei oder mehr Formelemente aufeinander treffen.

Die Struktur eines Formeinsatzes lässt sich entsprechend ihrer Funktion in zwei Bereiche aufteilen. Dies sind einerseits der formgebende Bereich, welcher die Kontaktfläche zum in der Spritzgussmaschine verwendeten Werkstoff bildet und die Geometrie des erstellten Werkstücks bestimmt, und andererseits der Unterbau, der bspw. zur Befestigung des Formeinsatzes in der Spritzgussmaschine bzw. in einem Spritzgusswerkzeug, welches seinerseits in eine Spritzgussmaschine eingesetzt wird, verwendet wird.

Formeinsätze werden üblicherweise aus homogenen Materialien wie z.B. Stahl hergestellt. Eine definierte Grenze zwischen formgebenden Bereich und Unterbau lässt sich hierbei üblicherweise nicht ziehen; vielmehr gehen die beiden Bereiche ineinander über.

Die Form und die Oberflächenqualität des herzustellenden Werkstücks ist von der Oberflächengeometrie und den Oberflächeneigenschaften des formgebenden Bereichs des Formeinsatzes abhängig. Um ein Werkstück mit hoher Qualität fertigen zu können, sollte die Oberfläche des formgebenden Bereichs des Formeinsatzes möglichst keine Fehlstellen wie z.B. Löcher oder Poren enthalten. Aufgrund der teilweise hohen Arbeitsdrücke sind auch oberflächennahe Fehlstellen wie z.B. kleinste Hohlräume zu vermeiden, da hieraus mit der Zeit kleinste Löcher oder Senken an der Oberfläche entstehen können, die sich ebenfalls negativ auf die Werkstückqualität auswirken können. Ferner soll die Oberfläche für die Serienfertigung häufig eine möglichst hohe Standzeit besitzen, also möglichst verschleißarm sein.

Den verwendeten Formeinsätzen kommt jedoch nicht nur aufgrund ihrer Oberflächengeometrie und den Oberflächeneigenschaften eine wesentliche Rolle zu, sondern auch aufgrund ihrer Fähigkeiten zur Wärmezuleitung und Wärmeableitung. Beim Spritzgussverfahren wird ein aufgeschmolzener Werkstoff in den durch die Formeinsätze gebildeten Hohlraum eingebracht und erstarrt dort. Einerseits muss zur Herstellung eines qualitativ hochwertigen Werkstücks ein gutes Fließverhaltens des Werkstoffs innerhalb der Spritzgussmaschine bzw. des Spritzgusswerkzeuges und des genannten Hohlraums gewährleistet werden, wie sie durch eine generell oder lokal hohe Temperatur des Werkstoffs und ggf. auch der Form erreicht werden kann. Andererseits soll eine möglichst schnelle Abkühlung des Werkstoffs erreicht werden, um möglichst viele Werkstücke pro Zeiteinheit produzieren zu können.

Innerhalb der Spritzgussmaschine bzw. des Spritzgusswerkzeuges muss also einerseits zeitweilig Wärme erhalten oder sogar zugeführt werden um das Fließverhalten des Werkstoffs zu optimieren; andererseits muss zeitweilig Wärme gezielt entzogen werden um ein möglichst schnelles Erstarren des Werkstoffs zu ermöglichen. In der Praxis hat sich gezeigt, dass die Notwendigkeit der Wärmezufuhr und Wärmeabfuhr stark von der Form des herzustellenden Werkstücks abhängig ist. So kühlen große oder dicke Elemente des Werkstücks wesentlich langsamer aus, als dünne oder kleine Elemente. Zur Wärmezufuhr und Wärmeabfuhr werden meist flüssigkeitsdurchströmte Kühlgeometrien verwendet, die je nach Anforderungen der Form mehr oder weniger aufwendig herzustellen sind.

Um die oben genannten Randbedingungen zu erfüllen, werden Formeinsätze üblicherweise aus homogenen Materialien wie z.B. Stahl hergestellt. Die Ausgestaltung der Form des Formeinsatzes wird üblicherweise mittels spanabhebender Verfahren wie z.B. Fräsen, Bohren, Sägen bzw. sonstigen materialabhebenden Formgebungsverfahren wie z.B. Elektroercsion, Lasererosion etc. erstellt.

Innerhalb der Form werden einfache Kühlgeometrien bspw. per Fräsen oder Bohren, aber falls notwendig auch durch Funkenerosion, Lasererosion etc. erstellt. Komplexere Kühlgeometrien können auch durch Fräsen oder Bohren von beispielsweise scheibenförmigen Einzelwerkstücken von geeigneter Dicke erfolgen, die dann zu einem Formeinsatz zusammengefügt werden. Hierdurch ist z.B. auch die Erstellung von parallel zur Formeinsatzoberfläche verlaufenden Kühlwegen möglich. Bei dieser Herstellungsart stellt sich jedoch das Problem, die genannten Einzeiwerkstücke fest, dicht, mechanisch belastbar und dauerstabil miteinander zu verbinden. Die mögliche Komplexität der Kühlgecmetrien ist jedoch unter anderem durch die nachfolgend notwendige Verbindung der beispielsweise scheibenförmigen Einzelwerkstücke begrenzt.

Die Oberfläche des Formeinsatzes wird üblicherweise per Schleifen, Sandstrahlen und Polieren etc., bzw. z.B. bei rauen Oberflächen auch per Funkenerosion, Lasererosion etc. fertiggestellt. Auch eine abschließende Beschichtung mittels allgemein bekannter Beschichtungsverfahren ist möglich.

Ein weiteres bekanntes Verfahren zur Herstellung von Formeinsätzen mit komplexen Kühlgeometrien ist das sogenannte Rapid Tooling. Bei Rapid-Tcoling-Verfahren handelt es sich um ein materialaufbauendes Fertigungsverfahren für Werkzeuge. Hierbei werden formlose Materialien wie z.B. Metallpulver mittels selektivem Schmelzen oder Sintern zum Aufbau von Werkzeugen verwendet. Übliche Verfahren sind das Lasersintern und das Laserschmelzen (letzteres auch bekannt unter der Bezeichnung "Lasercusing"). Beim Laserschmelzen wird mittels eines Lasers ein metallischer Pulverwerkstoff schichtweise selektiv verschmolzen. Durch entsprechende Steuerung des Lasers über eine Vielzahl von Schichten wird die Herstellung von praktisch beliebigen Formen ermöglicht, die auch praktisch beliebig geformte Hohlräume enthalten können. Diese können bspw. als Kühlgeometrien genutzt werden.

Bei der Herstellung von Formeinsätzen mittels Rapid Tooling erfolgt der Materialaufbau üblicherweise auf einer Trägerplatte aus Stahl, auf die der eigentliche Formeinsatz einschließlich der Kühlgeometrien schichtweise aufgebaut wird. Abschließend wird dann der nicht benötigte Teil der Trägerplatte entfernt, oder die Trägerplatte wird komplett entfernt.

Aus DE 102 29 952 A1 ist ein Verfahren zur Herstellung eines metallischen Werkstücks bestehend aus einem Unterteil und einem Oberteil bekannt, wobei das Unterteil vorgefertigt ist und das Oberteil durch einen Metallpulversinterprozess (Rapid Tooling bzw. Rapid Prototyping) auf das vorgefertigte Unterteil aufgebracht wird.

Zwar ist die Bildung auch von sehr komplexen Kühlgeometrien bei der Herstellung von Formeinsätzen mittels Rapid Tooling relativ einfach möglich, es ergeben sich hierbei jedoch andere Probleme. So treten beim Laserschmelzen durch nicht perfektes Aufschmelzen Unebenheiten an der Oberfläche und kleinste Hohlräume unterhalb der Oberfläche des Formeinsatzes auf. Um hochqualitative Werkstücke zu ermöglichen und eine gute Entformbarkeit zu gewährleisten, ist eine aufwändige Nachbearbeitung der Oberfläche der Formeinsätze notwendig. Hierbei kommen üblicherweise Verfahren wie bspw. fräsen, schleifen, aber auch Erosionsverfahren wie Funkenerosion und Lasererosion zum Einsatz. Ferner ist zur Erzielung einer glatten Oberfläche des Werkstücks ein Polieren der Oberfläche des Formeinsatzes notwendig.

Bei der Nachbearbeitung können ferner die Laserschmelzen auftretenden kleinsten Hohlräume, die sich vor der Nachbearbeitung dicht unterhalb der Oberfläche befinden, an die Oberfläche gelangen und zu fehlerhaften Werkstückoberflächen führen. In diesem Falle ist ein Nacharbeiten des Formeinsatzes notwendig; aus wirtschaftlichen Gründen wird ein solcher fehlerhafter Formeinsatz jedoch meist verworfen. Beim Lasersintern ist die Neigung zur Bildung von kleinsten Hohlräumen deutlich stärker gegeben als beim Laserschmelzen.

Auch während der Nutzung des Formeinsatzes bei der Herstellung von Spritzguss-Werkstücken können z.B. aufgrund von stetiger Abnutzung noch kleinste Hohlräume an die Oberfläche gelangen und zu fehlerhaften Werkstücken führer, die insbesondere bei einer weitgehend automatisierten Fertigung unter Umständen erst zu einem späteren Zeitpunkt in der Produktion entdeckt werden, was zu erheblichen Kosten führt. Ferner haben mittels Rapid Tooling hergestellte Werkzeuge generell eine geringere Standzeit als konventionell hergestellte.

Dem Effekt der Entstehung von kleinsten Hohlräumen kann durch Prozessoptimierung des Rapid-Tooling-Verfahrens entgegengewirkt werden, jedoch konnte eine gänzliche Vermeidung noch nicht erreicht werden.

Es ist somit die Aufgabe der vorliegenden Erfindung, ein Verfahren zur Herstellung von Werkzeugen, insbesondere von Formeinsätzen für Werkzeugmaschinen, insbesondere für Spritzgussmaschinen anzugeben, das einerseits komplexe Geometrien und andererseits eine haltbare und qualitativ hochwertige Oberfläche ermöglicht. Weiterhin ist die Aufgabe der Erfindung, ein Werkzeug zur Formgebung, insbesondere einen Formeinsatz für Werkzeugmaschinen anzugeben, das einerseits komplexe Geometrien und andererseits eine haltbare und qualitativ hochwertige Oberfläche aufweist.

Gelöst wird diese Aufgabe durch ein Verfahren gemäß Anspruch 1 sowie eine Anordnung gemäß Anspruch 11. Ausgestaltungen des erfindungsgemäßen Verfahrens und der erfindungsgemäßen Anordnung finden sich in den Unteransprüchen sowie der nachfolgenden Beschreibung.

Es wird somit ein Verfahren zur Herstellung von Werkzeugen, insbesondere von Formeinsätzen für Werkzeugmaschinen, insbesondere für Spritzgussmaschinen, nit den Schritten (a) Bereitstellen einer Trägerplatte; (b) Erstellen eines Unterbaus des Werkzeugs mittels eines Rapid-Tooling-Verfahrens auf der Trägerplatte; (c) Erstellen eines formgebenden Bereichs des Werkzeugs aus dem verbleibenden Material der Trägerplatte; vorgeschlagen. Hierdurch können die Vorzüge von Rapid-Tooling-Verfahren wie z.B. die Ermöglichung der Erstellung von komplexen Formen mit den Vorzügen konventionellen Herstellungsverfahren wie z.B. die Ermöglichung sehr widerstandsfähiger und belastbarer Oberflächen und sehr guter Homogenität der verwendeten Materialien verbunden werden.
In einer vorteilhaften Weiterbildung des Verfahrens wird in dem mittels des Rapid-Tooling-Verfahrens hergestellten Bereichs mindestens ein Hohlraum vorgesehen. Der oder die so erstellten Hohlräume können ungenutzt bleiben bzw. zur Materialeinsparung dienen oder bspw. zur Aufnahme von Schrauben, Bolzen o.ä. z.B. zu Führungszwecken verwendet, oder auch mit anderen Materialien gefüllt werden. Der/die Hohlräume können ferner von der Trägerplatte begrenzt werden oder Öffnungen zur Umgebung aufweisen oder komplett vom mittels des Rapid-Tooling-Verfahrens hergestellten Bereichs umschlossen sein.

In einer weiteren vorteilhaften Weiterbildung des Verfahrens wird der mindestens eine Hohlraum derart gestaltet, dass der Transport eines flüssigen oder gasförmigen Stoffes durch den Hohlraum ermöglicht wird. Dies erlaubt bspw. eine gezielte Erwärmung und/oder Abkühlung des Werkzeugs durch ein Kühl- bzw. Wärmetransportmittel. Wie eingangs beschrieben, spielt die Erwärmung und/oder Abkühlung von Formeinsätzen während des Produktionsprozesses insbesondere bei Spritzgussverfahren eine wesentliche Rolle. Durch die Verwendung eines Rapid-Tooling-Verfahrens wird es möglich, auf recht einfache Weise auch sehr komplexe und auf den Transport eines bestimmten Kühl- bzw. Wärmetransportmittels optimierte Hohlraum-Geometrien zu erzeugen, wie sie mit konventionallen verfahren wie z.B. Bohren, Fräsen, Erosionsverfahren etc. nur mit sehr hohem Aufwand oder gar nicht herstellbar wären. Hierbei seien beispielsweise Hohlräume mit im Verlauf unterschiedlichen Querschnitten und/oder nicht runden Querschnitten oder abknickende Hohlräume genannt. Auch der Einsatz von modernen Verfahren wie der Draht- bzw. Elektroerosion erlauben nur die Herstellung von begrenzt komplexen Hohlräumen und sind daher nicht so vorteilhaft wie die Verwendung von Rapid-Tooling-Verfahren. Auch benötigt die Herstellung des Unterbaus mit entsprechend komplexen Hohlräumen mittels Rapid-Tooling-Verfahren weniger Zeit als die Erstellung von vergleichbaren Hohlräumen in massiven Unterbauten z.B. mittels Draht- bzw. Elektroerosion.

In weiteren vorteilhaften Weiterbildungen des Verfahrens wird die Trägerplatte, aus der in einem weiteren Bearbeitungsschritt der formgebende Bereich des Werkzeugs erstellt wird, aus dem gleichen Material, aus dem konventionelle Werkzeuge hergestellt werden, gefertigt. Dies ist üblicherweise Stahl. Stahl ist einerseits ein relativ preisgünstiger Werkstoff; andererseits ist Stahl in hoher Güte und Homogenität erhältlich und lässt sich unter anderem mit den eingangs beschriebenen, konventionellen und sehr ausgereiften Bearbeitungsverfahren relativ gut bearbeiten. Die entsprechenden geeigneten Bearbeitungsparameter wie z.B. bei spanabhebenden Verfahren beispielsweise der Werkzeugvorschub, die Bohrerdrehzahl oder bei Erosionsverfahren beispielsweise Spannung, Stromfluss und Drahtsteuerung etc. sind für übliche Materialien wie Stahl weitgehend bekannt und können aus den bisher eingesetzten Verfahren zur Herstellung von Werkzeugen übernonmen werden. Auch ist der Nachbearbeitungsaufwand der formgebenden Geometrie und Oberfläche deutlich geringer als bei der Herstellung des formgebenden Bereichs mittels Rapid Tooling. Ferner stellt sich das Problem von kleinsten Hohlräumen auf oder nahe der Oberfläche der formgebenden Geometrie, wie sie bei Rapid-Tooling-Verfahren auftreten, nicht, da der formgebende Bereich erfindungsgemäß konventionell hergestellt wird. Desweiteren entspricht die Standzeit des erfindungsgemäß hergestellten Werkzeugs im Wesentlichen der eines komplett konventionell hergestellten Werkzeugs, da die am höchsten belasteten Regionen des Werkzeugs, nämlich der formgebende Teil, aus einem widerstandsfähigen konventionell hergestellten Material gefertigt sind, während der weniger stark belastete Unterbau per Rapid Tooling gefertigt wird.

In einer weiteren vorteilhaften Weiterbildung des Verfahrens wird der Unterbau des Werkzeugs mit größeren Abmessungen als benötigt hergestellt und die passende Außenkohtur in einem nachfolgenden Arbeitsschritt erstellt. Hierdurch wird eine bessere Maßhaltigkeit ermöglicht, da per Rapid-Tooling-Verfahren hergestellte Elemente prinzipbedingt eine im Vergleich zu anderen Verfahren geringere Maßhaltigkeit aufweisen. Durch die Nachbearbeitung des per Rapid-Tooling größer als benötigt hergestellten Unterbaus auf das tatsächlich benötigte Maß mittels konventioneller Verfahren wie z.B. Sägen, Schleifen, Erosion; Polieren etc. lassen sich wesentlich geringere Toleranzen realisieren.

Hinsichtlich der Anordnung wird die Aufgabe der Erfindung durch ein Werkzeug zur Formgebung, insbesondere. Formeinsatz für Werkzeugmaschinen, gelöst, das einen konventionell hergestellten formgebenden Bereich und einen zumindest teilweise nittels eines Rapid-Tooling-Verfahrens hergestellten Unterbau aufweist. Hierdurch werden die Vorteile von konventionell hergestellten Werkzeugen mit denen von mittels Rapid-Tcoling-Verfahren hergestellten Werkzeugen verbunden.

In einer Weiterbildung enthält der mittels eines. Rapid-Tooling-Verfahrens hergestellte Teil des Unterbaus mindestens einen Hohlraum. Der oder die so erstellten Hohlräume können ungenutzt bleiben bzw. zur Materialeinsparung dienen oder bspw. zur Aufnahme von Schrauben, Bolzen o.ä. z.B. zu Führungszwecken verwendet, oder auch mit anderen Materialien gefüllt werden. Der/die Hohlräume können ferner von der Trägerplatte begrenzt werden oder Öffnungen zur Umgebung aufweisen oder komplett vom mittels des Rapid-Tooling-Verfahrens hergestellten Bereichs umschlossen sein.

In einer weiteren vorteilhaften Weiterbildung ist dieser Hohlraum derart gestaltet, dass der Transport eines flüssigen oder gasförmigen Stoffes durch den mindestens einen Hohlraum ermöglicht wird. Dies erlaubt bspw. eine gezielte Erwärmung und/oder Abkühlung des Werkzeugs durch ein Kühl- bzw. Wärmetransportmittel. Wie eingangs beschrieben, spielt die Erwärmung und/oder Abkühlung von Formeinsätzen während des Produktionsprozesses insbesondere bei Spritzgussverfahren eine wesentliche Rolle. Durch die Verwendung eines Rapid-Tooling-Verfahrens wird es möglich, auf recht einfache Weise auch sehr komplexe und auf den Transport eines bestimmten Kühl- bzw. Wärmetransportmittels optimierte Hohlraum-Geometrien zu erzeugen, wie sie mit konventionellen Verfahren wie z.B. Bohren, Fräsen, Erosionsverfahren etc. nur mit sehr hohem Aufwand oder gar nicht herstellbar wären. Hierbei seinen beispielsweise Hohlräume mit im Verlauf unterschiedlichen Querschnitten und/oder nicht runden Querschnitten oder abknickende Hohlräume genannt. Auch der Einsatz von modernen Verfahren wie der Draht- bzw. Elektroerosion erlauben nur die Herstellung von begrenzt komplexen Hohlräumen und sind daher nicht so vorteilhaft wie die Verwendung von Rapid-Tooling-Verfahren- Auch benötigt die Herstellung des Unterbaus mit entsprechend komplexen Hohlräumen mittels Rapid-Tooling-Verfahren weniger Zeit als die Erstellung von vergleichbaren Hohlräumen in massiven Unterbauten z.B. mittels Draht- bzw. Elektroerosion.

In einer weiteren vorteilhaften Weiterbildung ist der formgebende Bereich des Werkzeugs aus Stahl gefertigt. Stahl ist einerseits ein relativ preisgünstiger Werkstoff; andererseits ist Stahl in hoher Güte und Homogenität erhältlich und lässt sich unter anderem mit den eingangs beschriebenen, konventionellen und sehr ausgereiften Bearbeitungsverfahren relativ gut bearbeiten. Die entsprechenden geeigneten Bearbeitungsparameter wie z.B. bei spanabhebenden Verfahren beispielsweise der Werkzeugvorschub, die Bohrerdrehzahl oder bei Erosionsverfahren beispielsweise Spannung, Stromfluss und Drahtsteuerung etc. sind für übliche Materialien wie Stahl weitgehend bekannt und können aus den bisher eingesetzten Verfahren zur Herstellung von Werkzeugen übernommen werden. Auch ist der Nachbearbeitungsaufwand der formgebenden Geometrie und Oberfläche deutlich geringer als bei der Herstellung des formgebenden Bereichs mittels Rapid Tooling. Ferner stellt sich das Problem von kleinsten Hohlräumen auf oder nahe der Oberfläche der formgebenden Geometrie, wie sie bei Rapid-Tooling-Verfahten auftreten, nicht, da der formgebende Bereich erfindungsgemäß konventionell hergestellt wird. Desweiteren entspricht die Standzeit des erfindungsgemäß hergestellten Werkzeugs im Wesentlichen der eines komplett konventionell hergestellten Werkzeugs, da die am höchsten belasteten Regionen des Werkzeugs, nämlich der formgebende Teil, aus einem widerstandsfähigen konventionell hergestellten Material gefertigt sind, während der weniger stark belastete Unterbau per Rapid Tooling gefertigt wird.

In einer weiteren Weiterbildung handelt es sich bei dem Werkzeug um einen Formeinsatz für Werkzeugmaschinen, insbesondere für Spritzgussmaschinen.

Die Erfindung wird nachfolgend anhand von Figuren weiter erläutert. In der Beschreibung der vorliegenden Erfindung wird primär auf Formeinsätze für Spritzgussmaschinen eingegangen. Hierbei werden die Formeinsätze üblicherweise in Spritzgusswerkzeuge eingesetzt, welche ihrerseits wiederum in Spritzgussmaschinen eingesetzt werden. Die Lehre der Erfindung ist jedoch auch auf Formen und formgebende Elemente für andere Urfom- und Umform-Verfahren wie z.B. dem Druckguss, dem Pulversintern von metallischen sowie nichtmetallischen Werkstoffen (z.B. Gummi und Kunststoffen), dem Pressen, Prägen, Tiefziehen, Stanzen etc. anwendbar.
Figur 1 zeigt ein einen Schnitt durch einen konventionell hergestellten Formeinsatz gemäß dem Stand der Technik.
Figur 2 zeigt ein einen Schnitt durch einen mittels Rapid Tooling hergestellten Formeinsatz gemäß dem Stand der Technik.
Figur 3 zeigt ein einen Schnitt durch einen mittels des erfindungsgemäßen Verfahrens hergestellten Formeinsatz.
Figur 4 zeigt einen Zwischenschritt bei der Herstellung eines erfindungsgemäßer Formeinsatzes.
Figur 5 zeigt einen erfindungsgemäßen, fertiggestellten Formeinsatz.

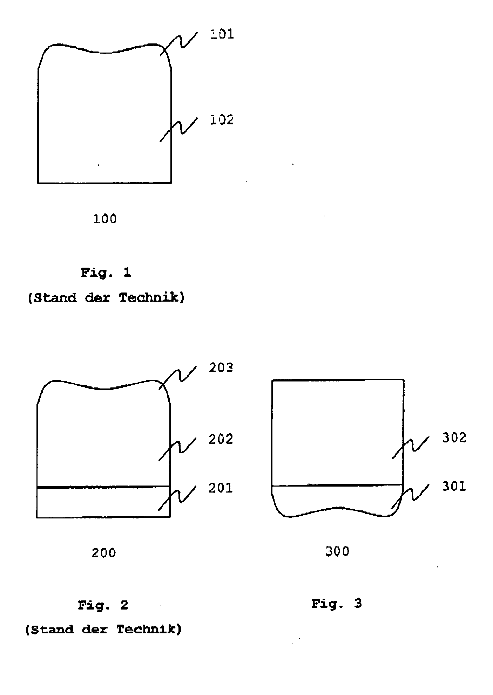

Figur 1 zeigt ein einen Schnitt durch einen konventionell hergestellten Formeinsatz 100 gemäß dem Stand der Technik. Dieser beinhaltet einen formgebenden Teil 101 sowie einen Unterbau 102. Die Aufteilung in einen formgebenden Teil und einen Unterbau ist hierbei nicht als physikalische Trennung, sondern vielmehr als funktionale Trennung zu sehen. Eine definierte Grenze zwischen formgebenden Bereich und Unterbau lässt sich hierbei üblicherweise nicht ziehen, vielmehr gehen die beiden Bereiche ineinander über. Innerhalb des Unterbau können einfache Hohlräume wie z.B. Sackbohrungen und/oder Gewindebohrungen vorhanden sein, die bspw. zur Befestigung und/oder Kühlung des Formeinsatzes verwendet werden können. Vorteilhaft bei komplett konventionell hergestellten Formeinsätzen ist z.B. die relativ einfache Erstellbarkeit der formgebenden Geometrien durch bekannte konventionelle Bearbeitungsverfahren sowie die hohe erreichbare Oberflächenqualität und hohe Standzeit des Formeinsatzes. Nachteilig ist hier, dass sich komplexe Kühlgeometrien bei komplett konventionell hergestellten Fomeinsätzen nicht oder nur sehr aufwendig realisieren lassen.

Figur 2 zeigt ein einen Schnitt durch einen mittels Rapid Tooling hergestellten Formeinsatz 200 gemäß dem Stand der Technik. Dieser beinhaltet eine konventionell erstellte Trägerplatte 201 und einen mittels eines Rapid-Tooling-Verfahrens hergestellten Anteil, der einen Unterbau 202 und eine formgebende Geometrie 203 umfasst. Die Aufteilung in einen formgebenden Teil 203 und einen Unterbau 202 ist hierbei nicht als physikalische Trennung, sondern vielmehr als funktionale Trennung zu sehen. Eine definierte Grenze zwischen formgebenden Bereich und Unterbau lässt sich hierbei nicht ziehen, vielmehr gehen die beiden Bereiche ineinander über. Die Trägerplatte 201 dient bei der Herstellung des Formeinsatzes als Basis für den Aufbau des Rapid-Tooling-Anteils und kann je nach geplanter Verwendung des Formeinsatzes nach Fertigstellung des Rapid-Tooling-Anteils entfernt werden oder als Teil des Formeinsatzes verbleiben. Vorteilhaft ist hier, dass durch die Verwendung eines Rapid-Tooling-Verfahrens die Erstellung von komplexen Hohlräumen innerhalb des Unterbaus 202 ermöglicht wird. Nachteilig ist hier, dass bei der Weiterbearbeitung und Verwendung der formgebenden Geometrie 203 diverse Probleme wie z.B. unerwünschte, kleinste Hohlräume und eine verringerte Standzeit des Formeinsatzes auftreten können, wie eingangs erläutert.

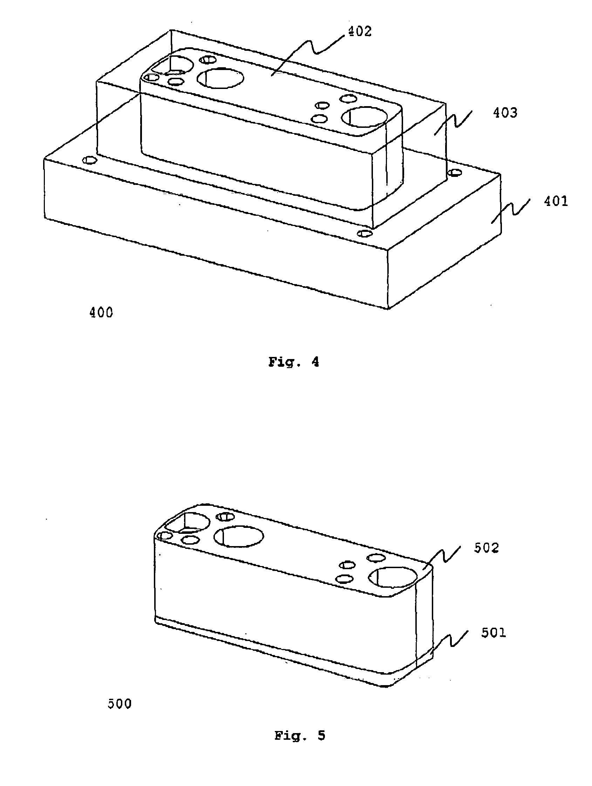

Figur 3 zeigt ein einen Schnitt durch einen mittels des erfindungsgemäßen Verfahrens hergestellten Fermeinsatz 300. Dieser beinhaltet einen mittels Rapid-Tooling hergestellten Unterbau 302 und einen mittels konventioneller Verfahren hergestellten formgebenden Bereich 301. Ein solcher Formeinsatz verbindet die Vorteile des Rapid-Toolings, bspw. die Ermöglichung der Erstellung von komplexen Hohlräumen innerhalb des Unterbaus 302, mit den Vorteilen der relativ einfachen Erstellbarkeit der formgebenden Geometrien durch bekannte konventionelle Bearbeitungsverfahren sowie die hohe erreichbare Oberflächenqualität und hohe Standzeit des Formeinsatzes. Die einzelnen Schritte zur Erstellung eines erfindungsgemäßen Formeinsatzes werden anhand von Figur 4 näher erläutert.

Figur 4 zeigt einen Zwischenschritt 400 bei der Herstellung eines erfindungsgemäßen Formeinsatzes Gezeigt wird eine Trägerplatte 401, auf die ein mittels Rapid Tooling erstellter Unterbau eines Formeinsatzes aufgebracht ist. Der mittels Rapid Tooling erstellte Unterbau ist hier weiter unterteilt in einen Unterbau mit Zielabmessungen 403 und einen überstehenden Bereich 402.

Erfindungsgemäß wird zunächst die Trägerplatte 401 bereitgestellt. Diese kann bspw. aus Stahl gefertigt sein; die Verwendung anderer Materialien ist aber ebenfalls möglich. Bei der Materialauswahl ist zu beachten, dass aus der Trägerplatte in einem späteren Bearbeitungsschritt die formgebende Geometrie erstellt wird; insofern hat, anders als beim gemäß Stand der Technik hergestellten und in Figur 2 gezeigten Formeinsatz, die Auswahl des Materials der Trägerplatte einen direkten Einfluss auf die Beschaffenheit des formgebenden Bereichs und somit auch auf die unter Verwendung des Formeinsatzes hergestellten Werkstücke. Im vorliegenden Ausführungsbeispiel wird mit Stahl für die Trägerplatte das gleiche Material verwendet, wie es auch für die konventionelle Herstellung von Formeinsätzen genutzt wird.

Auf die Trägerplatte wird der spätere Unterbau 402 des Formeinsatzes zusammen mit einem überstehenden Bereich 403 mittels selektivem Laserschmelzen (auch bekannt unter der Bezeichnung "Lasercusing") Schicht für Schicht aufgebaut. Hierbei werden je nach Bedarf auch ggf. sehr komplexe Hohlräume vorgesehen, die bei der späteren Verwendung des Formeinsatzes z.B. als Kühlgeometrien dienen, die von einem Kühl- bzw. Wärmetransportmittel durchströmt werden. Als Kühl- bzw. Wärmetransportmittel werden üblicherweise Flüssigkeiten verwendet; die Verwendung von gasformigen Mitteln ist jedoch ebenfalls möglich, wobei zu beachten ist, dass die Wärmetransportfähigkeit von Gasen allgemein deutlich geringer ist als die von Flüssigkeiten.

Nach der Erstellung des späteren Unterbaus 402 des Formeinsatzes zusammen mit dem überstehenden Bereich 403 werden sowohl der überstehende Bereich 403 als auch die Trägerplatte auf das spätere Zielmaß gebracht und aus den verbleibenden Teilen der Trägerplatte die formgebende Geometrie erstellt. Dies geschieht je nach Anforderungen unter Verwendung von bekannten materialabtragenden Formgebungsverfahren wie z.B. Sägen, Fräsen, Schleifen, Sandstrahlen und Polieren und, insbesondere wenn der formgebende Bereich des Formeinsatzes eine raue Oberfläche aufweisen soll, mittels Funkenerosion oder Lasererosion. Da beim vorliegenden Ausführungsbeispiel mit Stahl für die Tragerplatte das gleiche Material verwendet wird, wie es auch für die konventionelle Herstellung von Formeinsätzen genutzt wird, können vorteilhafterweise bei der Bearbeitung der Trägerplatte und der Erstellung der formgebenden Geometrie aus den verbleibenden Teilen der Trägerplatte die gleichen Bearbeitungsverfahren und Bearbeitungsparameter eingesetzt werdan, wie bei der konventionellen Herstellung von Formeinsätzen; es müssen also weder neue Verfahren verwendet noch aufwendig neue Bearbeitungsparameter ermittelz werden.

Nach der Fertigstellung der endgültigen Geometrie des formgebenden Bereichs kann abschließend noch eine Beschichtung mittels allgemein bekannter Beschichtungsverfahren aufgebracht werden und so die Standzeit des so erstellten Formeinsatzes weiter erhöht werden.

Figur 5 zeigt einen erfindungsgemäßen, fertiggestellten Formeinsatz 500, aufweisend einen mittels eines Rapid-Tooling-Verfahrens hergestellten Unterbau 502 und einen aus der Trägerplatte erstellten formgebenden Bereich 501.

**BEZUGSZEICHENLISTE**

| | |
|---|---|
| Formeinsatz (Stand der Technik) | 100 |
| Formgebender Bereich | 101 |
| Unterbau | 102 |
| | |
| Formeinsatz (Stand der Technik) | 200 |
| Trägerplatte | 201 |
| Unterbau | 202 |
| Formgebender Bereich | 203 |
| | |
| Formeinsatz | 300 |
| Formgebender Bereich | 301 |
| Unterbau | 302 |
| | |
| Zwischenschritt bei der Herstellung eines Formeinsatzes | 400 |
| Trägerplatte | 401 |
| Unterbau (überstehender Bereich) | 402 |
| Unterbau (Zielmaß) | 403 |
| | |
| Fertiggestellter Formeinsatz | 500 |
| Formgebender Bereich (fertiggestellt) | 501 |
| Unterbau (fertiggestellt) | 502 |

## Patentansprüche

1. Verfahren zur Herstellung von Formeinsätzen für Werkzeugmaschinen, mit den Schritten:
• Bereitstellen einer Trägerplatte (401);
• Erstellen eines Unterbaus (302, 402, 502) des Formeinsatzes mittels eines Rapid-Tooling-Verfahrens auf der Trägerplatte (401);
• Erstellen eines formgebenden Bereichs (301, 501) des Formeinsatzes aus dem verbleibenden Material der Trägerplatte (401).

2. Verfahren nach Anspruch 1, **dadurch gekennzeichnet, dass** beim Erstellen des Unterbaus (302, 402, 502) des Formeinsatzes mittels eines Rapid-Tooling-Verfahrens mindestens ein Hohlraum vorgesehen wird.

3. Verfahren nach Anspruch 2, **dadurch gekennzeichnet, dass** der mindestens eine Hohlraum derart gestaltet wird, dass der Transport eines flüssigen oder gasförmigen Stoffes durch den mindestens einen Hohlraum ermöglicht wird.

4. verfahren nach einem der Ansprüche 1 bis 3, **dadurch gekennzeichnet, dass** die Trägerplatte (401) aus aus dem gleichen Material, aus dem konventionelle Formeinsätze hergestellt werden, gefertigt ist.

5. Verfahren nach einem der Ansprüche 1 bis 4, **dadurch gekennzeichnet, dass** die Trägerplatte (401) aus Stahl gefertigt ist.

6. Verfahren nach einem der Ansprüche 1 bis 4, **dadurch gekennzeichnet, dass** die Bearbeitung des formgebenden Bereichs (301, 501) des Formeinsatzes mittels materialabtragender Formgebungsverfahren erfolgt.

7. Verfahren nach einem der Ansprüche 1 bis 6, **dadurch gekennzeichnet, dass** die Bearbeitung des formgebenden Bereichs (301, 501) des Formeinsatzes mittels konventioneller Formgebungsverfahren erfolgt.

8. Verfahren nach einem der Ansprüche 1 bis 7, **dadurch gekennzeichnet, dass** zur Bearbeitung des formgebenden Bereichs (301, 501) die gleichen Bearbeitungsverfahren und Bearbeitungsparameter eingesetzt werden, wie bei Formeinsätzen, die ohne Verwendung von Rapid-Tooling-Verfahren hergestellt werden.

9. Verfahren nach einem der Ansprüche 1 bis 8, **dadurch gekennzeichnet, dass** der Unterbau (302, 402, 502) des Formeinsatzes mit größeren Abmessungen (403) als benötigt hergestellt wird und die passende Außenkontur in einem nachfolgenden Arbeitsschritt erstellt wird.

10. Verfahren nach Anspruch 9, **dadurch gekennzeichnet**, der nachfolgende Arbeitsschritt mittels eines spanabhebenden Formgebungsverfahrens und/oder eines Erosionsverfahrens und/oder Schleifen und/oder Polieren erfolgt.

11. Formeinsatz für Werkzeugmaschinen, **dadurch gekennzeichnet, dass** der Formeinsatz einen konventionell hergestellten formgebenden Bereich (301, 501) und einen zumindest teilweise mittels eines Rapid-Tooling-Verfahrens hergestellten Unterbau (302, 402, 502) aufweist.

12. Formeinsatz nach Anspruch 11, **dadurch gekennzeichnet, dass** der mittels eines Rapid-Tooling-Verfahrens hergestellte Teil des Unterbaus (302, 402, 502) mindestens einen Hohlraum enthält.

13. Formeinsatz nach einem der Ansprüche 11 bis 12, **dadurch gekennzeichnet, dass** der mindestens eine Hohlraum den Transport eines flüssigen oder gasförmigen Stoffes durch den mindestens einen Hohlraum ermöglicht.

14. Formeinsatz nach einem der Ansprüche 11 bis 13, **dadurch gekennzeichnet, dass** der formgebende Bereich (301, 501) des Formeinsatzes aus Stahl gefertigt ist.

15. Formeinsatz nach einem der Ansprüche 11 bis 14, **dadurch gekennzeichnet, dass** es sich um einen Formeinsatz für Spritzgussmaschinen handelt.

## Claims

1. A method for producing mould inserts for machine tools, comprising the following steps:
• providing a support plate (401);
• creating a sub-structure (302, 402, 502) of the mould insert on the support plate (401) by means of a rapid-tooling method;
• creating a shaping region (301, 501) of the mould insert from the remaining material of the support plate (401).

2. The method according to claim 1, **characterised in that**, when creating the sub-structure (302, 402, 502) of the mould insert by means of a rapid-tooling method, at least one cavity is provided.

3. The method according to claim 2, **characterised in that** the at least one cavity is formed in such a way that the transport of a liquid or gaseous substance through the at least one cavity is enabled.

4. The method according to one of claims 1 to 3, **characterised in that** the support plate (401) is fabricated from the same material from which conventional mould inserts are produced.

5. The method according to one of claims 1 to 4, **characterised in that** the support plate (401) is fabricated from steel.

6. The method according to one of claims 1 to 4, **characterised in that** the shaping region (301, 501) of the mould insert is processed by means of material-removing shaping methods.

7. The method according to one of claims 1 to 6, **characterised in that** the shaping region (301, 501) of the mould insert is processed by means of conventional shaping methods.

8. The method according to one of claims 1 to 7, **characterised in that**, in order to process the shaping region (301, 501), the same processing methods and processing parameters are used as with mould inserts that are produced without use of rapid-tooling methods.

9. The method according to one of claims 1 to 8, **characterised in that** the sub-structure (302, 402, 502) of the mould insert is produced with larger dimensions (403) than required and the matching outer contour is created in a subsequent process step.

10. The method according to claim 9, **characterised in that** the subsequent process step is performed by means of a machining shaping method and/or an erosion method and/or grinding and/or polishing.

11. A mould insert for machine tools, **characterised in that** the mould insert has a conventionally produced shaping region (301, 501) and a sub-structure (302, 402, 502) produced at least in part by means of a rapid-tooling method.

12. The mould insert according to claim 11, **characterised in that** the part of the sub-structure (302, 402, 502) produced by means of a rapid-tooling method contains at least one cavity.

13. The mould insert according to one of claims 11 to 12, **characterised in that** the at least one cavity enables the transport of a liquid or gaseous substance through the at least one cavity.

14. The mould insert according to one of claims 11 to 13, **characterised in that** the shaping region (301, 501) of the mould insert is fabricated from steel.

15. The mould insert according to one of claims 11 to 14, **characterised in that** it is a mould insert for injection moulding machines.

## Revendications

1. Procédé pour la fabrication de garnitures de moule pour des machines-outils, avec les étapes suivantes :
• mise à disposition d'un plateau de support (401) ;
• réalisation d'une embase (302, 402, 502) de la garniture de moule au moyen d'un procédé d'outillage rapide sur le plateau de support (401) ;
• réalisation d'une région de moulage (301, 501) de la garniture de moule à partir du matériau restant du plateau de support (401).

2. Procédé selon la revendication 1, **caractérisé en ce que**, lors de la réalisation de l'embase (302, 402, 502) de la garniture de moule, au moins un espace creux est formé au moyen d'un procédé d'outillage rapide.

3. Procédé selon la revendication 2, **caractérisé en ce que** l'au moins un espace creux est conçu de manière à permettre le transport d'une substance liquide ou gazeuse par l'au moins un espace creux.

4. Procédé selon l'une des revendications 1 à 3, **caractérisé en ce que** le plateau de support (401) est constitué du même matériau que les garnitures de moule conventionnelles.

5. Procédé selon l'une des revendications 1 à 4, **caractérisé en ce que** le plateau de support (401) est constitué d'acier.

6. Procédé selon l'une des revendications 1 à 4, **caractérisé en ce que** l'usinage de la région de moulage (301, 501) de la garniture de moule est réalisé au moyen de procédés de façonnage par abrasion de matière.

7. Procédé selon l'une des revendications 1 à 6, **caractérisé en ce que** l'usinage de la région de moulage (301, 501) de la garniture de moule est réalisé au moyen de procédés de façonnage conventionnels.

8. Procédé selon l'une des revendications 1 à 7, **caractérisé en ce que** l'usinage de la région de moulage (301, 501) est réalisé au moyen des mêmes procédés d'usinage et paramètres d'usinage que les garnitures de moule produites sans recours à un procédé d'outillage rapide.

9. Procédé selon l'une des revendications 1 à 8, **caractérisé en ce que** l'embase (302, 402, 502) de la garniture de moule est réalisée avec des dimensions (403) plus grandes que nécessaire, et le contour extérieur approprié est réalisé au cours d'une étape de travail consécutive.

10. Procédé selon la revendication 9, **caractérisé en ce que** l'étape de travail consécutive est exécutée au moyen d'un procédé de façonnage par enlèvement de copeaux et/ou d'un procédé d'érosion et/ou par ponçage et/ou par polissage.

11. Garniture de moule pour machines-outils, **caractérisée en ce que** la garniture de moule comporte une région de moulage (301, 501) réalisée de façon traditionnelle et une embase (302, 402, 502) réalisée au moins partiellement au moyen d'un procédé d'outillage rapide.

12. Garniture de moule selon la revendication 11, **caractérisée en ce que** la partie de l'embase (302, 402, 502) qui est réalisée au moyen d'un procédé d'outillage rapide contient au moins un espace creux.

13. Garniture de moule selon l'une des revendications 11 à 12, **caractérisée en ce que** l'au moins un espace creux permet de transporter une substance liquide ou gazeuse à travers l'au moins un espace creux.

14. Garniture de moule selon l'une des revendications 11 à 13, **caractérisée en ce que** la région de moulage (301, 501) de la garniture de moule est constituée d'acier.

15. Garniture de moule selon l'une des revendications 11 à 14, **caractérisée en ce qu'**il s'agit d'une garniture de moule pour des machines de moulage par injection.
